# EUROPEAN PATENT APPLICATION

(11) **EP 1 797 970 A2**
(43) Date of publication of application: **20.06.2007**
(21) Application number: 06025102.2
(22) Date of filing: 05.12.2006
(51) Int. Cl.: B09B 3/00

(54) **Method of immobilising the organic wet fraction of household refuse, product thus obtained and binding agent for use in the method**

(30) Priority: 19.12.2005 NL 1030705; 04.07.2006 NL 1032112
(71) Applicant: ARN BV, 6551 DZ Weurt (NL)
(72) Inventor: van Gorkum, Gerardus Henricus Johannes Paulus, 6562 ML Groesbeek (NL); Groen, Hendrik, 6551 DH Weurt (NL); Arends, Hendrikus Jacobus Johannes, 6687 AW Angeren (NL); Elsinga, Willem, 3853 JA Ermelo (NL)
(74) Representative: Van Someren, Petronella F. H. M.

(57) **Abstract**

The present invention relates to a method for immobilizing the organic wet fraction from domestic waste, comprising mixing organic wet fraction (OWF) with a binder comprising cement, lime, optional fillers, and water in order to obtain a mixture with an alkaline pH in which the organic wet fraction is immobilized. The invention further provides the immobilized Organic Wet Fraction thus obtained and a binder for use in the method.

## Description

The present invention relates to a method for immobilizing the so-called organic wet fraction (OWF) from domestic waste. The invention further relates to the product which is manufactured using this method, the use of this product, and a binder for use in the method.

Large quantities of domestic waste are produced every year. There are various methods for processing this waste. Incineration of so-called secondary fuel is one of these methods. Such an incineration forms an excellent energy source, since electricity is generated with the released combustion heat.

The composition of the waste is of great importance here since this partly determines the efficiency of the incineration.

The fuel resulting after a pre-treatment is known as RDF (Refuse Derived Fuel) and consists of a coarse fraction of high-calorific components such as paper, plastic and wood, with an average calorific value of about 11.5 megajoule per kg.

The pre-treatment comprises reducing the incoming waste in a crushing installation, after which deferrization takes place and a separation into a very well combustible fraction and a fraction which is difficult to combust takes place in drum screens. The fraction which is difficult to combust, on average 40% of the total, has a low calorific value and is therefore unsuitable for incineration in the same furnaces. This fraction is referred to as the Organic Wet Fraction (OWF) and mainly comprises organic and inert material such as sand, glass, plastic, metal etc. Another use has to be found for this material.

Heretofore, this material has usually been landfilled. Landfilling of this material is taxed because it has an adverse environmental impact. A significant environmental drawback of landfilling OWF is the emission of (greenhouse) gases due to spontaneous microbiological fermentation occurring at the landfill when the organic matter decomposes. Because the environmental charges for the disposal of waste have changed, the OWF now falls into a higher charge category, whereby landfilling of this type of waste becomes more expensive than incineration.

It is therefore the object of the present invention to provide a method for manufacturing a product which avoids the environmental drawbacks of landfilling the organic wet fraction of domestic waste.

In order to prevent the emission of (greenhouse) gases by spontaneous microbiological fermentation, attempts have been made to bind the organic matter using a binder. Instead of this emission of gases, whereby among others the CO₂ in the atmosphere would increase, it is precisely this CO₂ which is extracted from the atmosphere by immobilizing organic matter from the waste. This contributes toward a reduction in the annual rise in CO₂. What was first an environmental drawback of landfilling hereby becomes an environmental advantage. The attempt was made to achieve this binding of organic matter by mixing it with cement (immobilization), lime (high pH) and fillers (limitation of moisture transport), whereby the microbiological conversion could be stopped substantially permanently.

Surprisingly, it has been found here that the material processed in this manner is suitable as at least a category 2 building material, thereby allowing use thereof outside the landfill. This is all the more surprising since it is generally difficult to immobilize organic materials into building material.

The invention therefore provides a method for immobilizing the organic wet fraction from domestic waste, comprising mixing organic wet fraction (OWF) with a binder comprising cement, lime, optional fillers, and water in order to obtain a mixture with an alkaline pH in which the organic wet fraction is immobilized. This is the so-called immobilizate.

The organic wet fraction is obtained by supplying waste, optionally reducing the waste and separating the waste according to size. Separation according to size for instance takes place by screening the optionally reduced domestic waste, wherein the part which fall through forms the organic wet fraction. The mesh-size of the screen determines the maximum size of the waste particles.

The organic wet fraction generally has a diameter of less than 100 mm, in particular less than 90 mm, preferably less than 80 mm, more preferably less than 70 mm, most preferably less than 60 mm.

Where 'organic wet fraction' or 'OWF' is mentioned in this application, also the material as described above which has been composted and/or fermented prior to or after separation is included.

Depending on the amount of water, the immobilizate has a consistency varying from cement-like to clay-like. Prior to processing thereof, the immobilizate can be formed at the landfill or building site, or be directly arranged as such on site. Forming can for instance take place by pouring the immobilizate into a formwork. Such a formwork for instance takes the form of the building structure to be produced. After pouring into the formwork, the strength of the form can be improved by levelling off or by means of rollers or other means. If the immobilizate has a somewhat firmer consistency, it can also be brought into the desired form directly, without the use of formwork. The immobilizate will eventually dry, whereby an even firmer consistency is obtained.

After addition of the binder according to the invention the product has an alkaline pH. The pH value depends on the composition of the binder. If necessary or desired, the pH can be still further adjusted.

The alkaline pH value ensures that the emission of biogas and the leaching of heavy metals is limited or wholly obviated.

The alkaline value is a pH of at least 10, preferably at least 11, more preferably at least 12.

At such alkaline pHs some leaching of the metal copper has in some cases still been found to occur. It is therefore recommended to also take measures preventing the leaching of copper. A category 1 building material is hereby obtained, which can be applied without insulation.

Preventing copper leaching can take place by applying copper-binding or leaching-limiting means in the binder or the OWF. The first category for instance includes zeolites, organic acids or humic acids. Improvement of copper binding can also be obtained by composting or fermentation or a combination of both prior to addition of the binder. Leaching can also be limited by sealing the pores through which the copper can leach. This can be brought about by adding more fillers and/or strengthening the form of the immobilizate as mentioned before. In a preferred embodiment sufficient filler is added and the form of the material is also sufficiently strengthened. A skilled person can determine what is sufficient in this respect by making a test body with different parameters and measuring the leaching of copper therefrom.

According to the invention the OWF is mixed with at least cement and lime. As stated above, it is recommended to also add fillers so as to fill up the coarse organic structure of the OWF. The required form-retention is thus obtained and pores are sealed.

Suitable fillers are coal-dust fly ash and paper lime. Paper lime remains after incineration of paper sludge. Coal-dust fly ash are the finer ash particles which are released during the burning of coal in power stations and which enter the flue gas duct along with the flue gases and there cool slowly into glassy globules. It then resembles fine, gray sand. Just as clay and coal, coal-dust fly ash consists of different natural substances and elements. The composition of coal-dust fly ash greatly resembles that of clay. It contains aluminium iron silicates with lime, potassium, sodium and all trace elements which normally occur in the ground. Fly ash has a fine grain structure (70% <45µm), is bone-dry and has pozzolanic properties, i.e. together with lime and water it has the same binding properties as cement.

The invention also provides a building material which can be obtained by the method according to the invention. This building material consists of waste particles of organic wet fraction immobilized in a matrix containing cement. Fillers and lime are present in addition to cement. The pH in the matrix preferably amounts to at least 10, and is more preferably at least 12.

The invention further relates to a binder which can be applied as an additive to Organic Wet Fraction for the purpose of manufacturing a building material according to the invention. This binder consists of cement, lime and one or more fillers. In order to manufacture the building material the binder and the Organic Wet Fraction are mixed with water.

The quantity of cement can vary between about 10 and 30%, preferably between about 12 and 28%, more preferably between about 15 and 23%, and is most preferably about 18%. The proportion of lime lies between about 4 and 12%, preferably between about 6 and 10%, and is most preferably about 8%. The fillers form the rest and can for instance vary from 36 to 76% for coal-dust fly ash and between 10 and 28% for paper lime. The proportion of coal-dust fly ash preferably amounts to between 45 and 65%, and is most preferably about 56% at a paper lime proportion of about 18%.

In a preferred embodiment the composition of the binder is:
18% cement
8% quicklime
56% coal-dust fly ash
18% paper lime.

The Organic Wet Fraction has a relatively irregular form. A shape-retaining building material can nevertheless be obtained with the binder according to the invention. When the obtained product is landfilled, there will be substantially no further (greenhouse) gas emission and the leaching of the heavy metals is also very greatly reduced. Because it can however also be used as a building material, the product has added value. As a category 2 building material it can be used at landfills as covering. For use as a category 2 building material insulation of the soil is required. As category 1 building material the product can be used at the landfill without insulation, but it can also be used outside the landfill, such as in the construction of roads, bridges and viaducts.

The invention will be further elucidated on the basis of the following examples, which are only intended by way of illustration and not to limit the invention defined in the claims.

### EXAMPLES

### EXAMPLE 1

### Gas emission Organic Wet Fraction

### Introduction

The object of this example was to immobilize OWF such that no or very little gas would be formed from OWF at a landfill. The formation of (greenhouse) gases is one of the greatest environmental drawbacks of landfilling waste.

Two tests were carried out in which the behaviour of treated and untreated OWF were compared to each other. A laboratory set-up was used here to verify whether the treatment of OWF results in a reduced gas production. Treated material is OWF mixed with binder and water. Untreated material is OWF with water only.

### Material and method

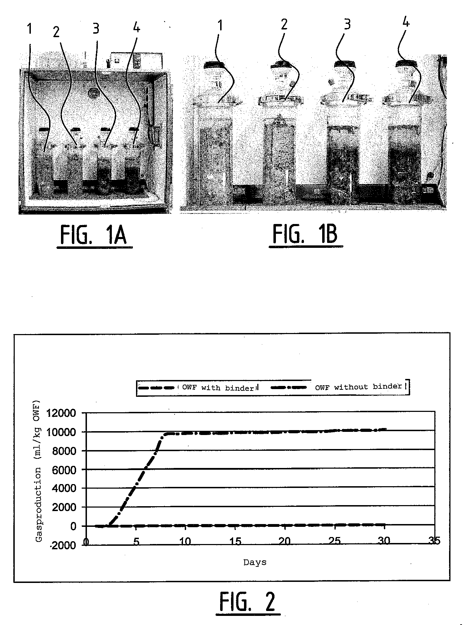

The test was carried out in duplicate. **Figure 1** and **Table 1** below show the test set-up.

**Table 1**

| Test set-up | | | | | |
|---|---|---|---|---|---|
| | Reactor volume (ml) | Material | Quantity of material (g) | Quantity of OWF (g) | Quantity of water per g of OWF (g) |
| Reactor 1 | 2920 | treated | 2214 | 904 | 1.4 |
| Reactor 2 | 2932 | treated | 2227 | 909 | 1.4 |
| Reactor 3 | 2936 | untreated | 901 | 901 | 1.4 |
| Reactor 4 | 2923 | untreated | 906 | 906 | 1.4 |

In order to allow the water in reactors 1 and 2 to run well between the wall and the material, five holes were drilled in the material using a metal rod. Four of these directly between the wall and the material, and the fifth in the centre of the material.

The test had a duration of 30 days. At the beginning and end of the test pH-measurements were carried out on the reactor fluid. During the test the gas production was monitored and the gas composition was measured a number of times.

### Analysis of gas production

The volume of biogas produced was determined using two systems. First, the Oxitop system was used, wherein heads measure the pressure in the reactors (in hPa) and this is converted to ml of gas using the ideal gas law. When the gas production became too great for the Oxitop heads, a switch was made to a wet gas meter.

Contents of methane, carbon dioxide, oxygen and nitrogen were determined using a Hewlett Packard 5890 gas chromatograph provided with two different columns: 30 m Molsieve 5A 0.53 mm x 15 µm and 25 m Poraplot Q 0.53 mm x 20 µm. The carrier gas was helium and the temperatures of the column, the injection port and the TCD detector were respectively 45°C, 110°C and 99°C. The injection volume was 100 µl.

### RESULTS

**Figure 2** shows that practically no gas is formed from the OWF with binder and that a very large quantity of gas is formed from the OWF without binder (500 times more gas than the quantity of gas from OWF with binder).

Almost no gas was produced in the reactors with treated material. Given the high pH of the treated material, no biological reactions took place therein. The measured gas production was very low and probably had a chemical background.

An increase in dissolved organic material was however measured due to the diffusion of the organic matter from the treated OWF. This organic material could be converted into methane gas under landfill conditions. The leached organic material would potentially form 0.025 m³ CH₄ per kg of OWF-OS (7.5 m³ CH₄ per tonne OWF), a considerable reduction compared to 380 m³ methane per kg OWF-OS which may be expected for untreated OWF.

The results of these tests indicate that the tested immobilization of OWF for application at a landfill will result in low production of the greenhouse gas methane.

### EXAMPLE 2

### Leaching study immobilized OWF-fraction

### Introduction

The leaching of heavy metals is one of the criteria taken into consideration when a product is assessed for use as a building material. In this example is assessed whether the processing of the OWF-fraction into a bound product using the binder according to the invention results in an effective immobilization of the problem components, including the heavy metals cadmium, nickel and zinc.

### Material and method

### 1. Preparing the immobilizate

About 100 kg of OWF-fraction was divided representatively into sub-fractions via gap distribution. A quarter of the original product was not processed. From this, three part samples are utilized for the grain diffusion test on untreated OWF.

The other starting material is mixed with binder as follows: 0.62 kg binder and 0.85 1 water are added per 1 kg OWF. The density of the prepared mixture is 1275 kg/m³. The binder consists of 18% cement, 8% quicklime, 56% coal-dust fly ash and 18% paper lime. A part of the product is compacted in accordance with the standard preparation of test samples from the standard RAW assays (RAW test 5.1) and from the Assessment Guideline 9322 for cement-bound mineral residual substances.

Three part samples of the compacted material were utilized for the diffusion test after a curing of 28 days at 20°/95% moisture. A part of the prepared mixture is compacted in uncured state for 28 days at 20°/95% moisture as reserve samples.

### 2. Performing leaching study

The leach test in this study is the diffusion test. The diffusion test amounts essentially to the material lying in a vessel of water, the water being changed on a logarithmic timescale and the water being analysed for 15 heavy metals and 4 anions. For the original material the test is carried out with the grain diffusion test (NEN 7347). For the immobilizate the test is carried out with the diffusion test for shaped samples (NEN 7375).

In order to limit the number of analyses, not all 8 fractions of the diffusion test are analysed but a mixed eluate of the 8 fractions is analysed.

The immission into the ground is calculated from the leaching. This calculated immission was compared to the immission limit values from appendix 2 of the Dutch Building Materials Regulations. The immission is calculated for category 1A building materials, i.e. for uninsulated applications, the widest application.

The calculated results are shown in **Table 2**.

**Table 2**

| Calculated indicative immission (I_{100 yr}) as a category 1A building material of the mixed eluate of the diffusion test for the starting product and for the immobilizate, and the limit values from the Dutch Building Materials Regulations. | | | | | | | |
|---|---|---|---|---|---|---|---|
| parameter | OWF fraction | | | Immobilizate | | | limit |
| | 1 | 2 | 3 | 1 | 2 | 3 | |
| | (mg/m²) | (mg/m²) | (mg/m²) | (mg/m²) | (mg/m²) | (mg/m²) | (mg/m²) |
| | | | | | | | |
| antimony | 50 | 46 | 91 | <13 | <13 | <13 | 117 |
| arsenic | <190 | <190 | <190 | <157 | <157 | <157 | 435 |
| barium | 151 | 91 | 91 | 3400 | 3200 | 2010 | 18900 |
| cadmium | 37 | 33 | 29 | <3 | <3 | <3 | 12 |
| chromium | 42 | 63 | 144 | <31 | <31 | <31 | 1500 |
| cobalt | 73 | 106 | 70 | <31 | <31 | <31 | 300 |
| copper | 181 | 60 | 136 | 1071 | 819 | 756 | 540 |
| mercury | <1 | <1 | <1 | <1 | <1 | <1 | 4,5 |
| molybdenu m | 51 | 46 | 61 | 54 | 43 | 44 | 450 |
| nickel | 620 | 582 | 718 | 164 | 145 | 151 | 525 |
| lead | 159 | 166 | 204 | 63 | 94 | 132 | 1275 |
| selenium | <15 | <15 | <15 | 13 | 13 | 13 | 45 |
| tin | <57 | <57 | <57 | 47 | 47 | 47 | 300 |
| vanadium | <76 | <76 | <76 | 63 | 63 | 63 | 7200 |
| zinc | 16600 | 14400 | 18100 | 315 | 157 | *340* | 2100 |
| | | | | | | | |
| fluoride | 756 | 756 | 832 | 1512 | 1356 | 2898 | 42000 |
| chloride | *194000* | *169000* | *206000* | *39000* | *39000* | *36000* | 30000¹ |
| sulphate | 105000 | 69000 | 91000 | 2000 | 2200 | 2100 | 135000 |
| bromide | *194* | *181* | *218* | *192* | *171* | *161* | 90¹ |

| | | | | | | | |
|---|---|---|---|---|---|---|---|
| 1: when used at locations where direct contact exists or is possible with brackish surface water with a chloride content of more than 5000 mg/l or seawater, there is no immission limit value for chloride and for bromide. | | | | | | | |

The immobilizate indicatively complies with the immission requirements for shaped category 2 building materials of the Building Materials Regulations. Due to an increase in the leaching of copper through the addition of the binder the immobilizate does not yet meet the requirements for shaped category 1A building materials of the Building Materials Regulations. The increase in the leaching of copper is an effect of the high pH in the immobilizate due to the binder.

The most critical heavy metals for the starting product, the OWF-fraction, are cadmium, nickel and zinc. Particularly the leaching of zinc exceeds the immission limit value of the Building Materials Regulations by a factor 7 to 9 for the material tested here.

Cadmium, nickel and zinc are effectively immobilized by the addition of binder according to the invention to the OWF-fraction. The immobilization efficiency varies per parameter. For cadmium the efficiency is > 90%, for nickel it is about 80%, for zinc the immobilization efficiency is 98-99%.

The leaching of chloride is greatly reduced. The leaching of copper is increased by the addition of the binder. This is a pH effect. The pH in the mixed eluate of the immobilizates is pH = 12.1. The pH in the mixed eluate of the starting product is pH = 7.0. The leaching of heavy metals is always greatly dependent on the pH. It is known in respect of copper that the minimum in the curve of leaching against pH lies at about pH = 8. At a higher pH more soluble copper hydroxide complexes are on the contrary formed.

A further test is carried out as to whether the immobilizate complies with the criteria for a category 2 building material. A category 2 building material must be arranged in a construction under insulating conditions (IBC conditions, see Building Materials Regulations). The results of this test are shown in **Table 3**.

**Table 3**

| Calculated indicative immission (I_{100 yr}) as a category 2 building material from the mixed eluate of the diffusion test for the starting product and for the immobilizate and the limit values from the Building Materials Regulations. | | | | | | | |
|---|---|---|---|---|---|---|---|
| parameter | OWF fraction | | | immobilizate | | | limit |
| | 1 | 2 | 3 | 1 | 2 | 3 | |
| | (mg/m²) | (mg/m²) | (mg/m²) | (mg/m²) | (mg/m²) | (mg/m²) | (mg/m²) |
| | | | | | | | |
| antimony | 16 | 15 | 29 | 4,0 | 4,0 | 4,0 | 117 |
| arsenic | 60 | 60 | 60 | 50 | 50 | 50 | 435 |
| barium | 48 | 29 | 29 | 1076 | 1016 | 638 | 18900 |
| cadmium | 12 | 10 | 9 | *1,0* | *1,0* | *1,0* | 12 |
| chromium | 13 | 20 | 45 | 10 | 10 | 10 | 1500 |
| cobalt | 23 | 33 | 22 | 10 | 10 | 10 | 300 |
| copper | 57 | 19 | 43 | 339 | 259 | 239 | 540 |
| mercury | 0,4 | 0,4 | 0,4 | 0,3 | 0,3 | 0,3 | 4,5 |
| molybdenum | 16 | 15 | 19 | 17 | 14 | 14 | 450 |
| nickel | 196 | 184 | 227 | 52 | 46 | 48 | 525 |
| lead | 50 | 53 | 65 | 20 | 30 | 42 | 1275 |
| selenium | 4,8 | 4,8 | 4,8 | 4,0 | 4,0 | 4,0 | 45 |
| tin | 18 | 18 | 18 | 15 | 15 | 15 | 300 |
| vanadium | 24 | 24 | 24 | 20 | 20 | 20 | 7200 |
| zinc | **5260** | **4542** | **5738** | *100* | *50* | *108* | 2100 |
| | | | | | | | |
| fluoride | 239 | 239 | 263 | 478 | 438 | 916 | 42000 |
| chloride | ***61201*** | ***53551*** | ***65027*** | *12431* | *12431* | *11475* | 30000¹ |
| sulphate | 33278 | 21803 | 28688 | 638 | 701 | 669 | 135000 |
| bromide | 61 | 57 | 69 | 61 | 54 | 51 | 90¹ |

The leaching of the immobilizate complies with the criteria of category 2 building materials.

## Claims

1. Method for immobilizing the organic wet fraction from domestic waste, comprising mixing organic wet fraction (OWF) with a binder comprising cement, lime, optional fillers, and water in order to obtain a mixture with an alkaline pH in which the organic wet fraction is immobilized.

2. Method as claimed in claim 1, **characterized in that** the organic wet fraction has a diameter of less than 100 mm.

3. Method as claimed in claim 2, **characterized in that** the organic wet fraction has a diameter of less than 90 mm, preferably less than 80 mm, more preferably less than 70 mm, most preferably less than 60 mm.

4. Method as claimed in any of the claims 1-3, **characterized in that** the fillers are chosen from coal-dust fly ash, paper lime or combinations thereof.

5. Method as claimed in any of the claims 1-4, **characterized in that** the quantity of cement can vary between about 10 and 30%, preferably between about 12 and 28%, more preferably between about 15 and 23%, and is most preferably about 18%.

6. Method as claimed in any of the claims 1-5, **characterized in that** the quantity of lime lies between about 4 and 12%, preferably between about 6 and 10%, and is most preferably about 8%.

7. Method as claimed in any of the claims 1-6, **characterized in that** the quantity of fillers varies from 36 to 76% for coal-dust fly ash and between 10 and 28% for paper lime, the proportion of coal-dust fly ash preferably amounting to between 45 and 65%, and being most preferably about 56% at a paper lime proportion of about 18%.

8. Method as claimed in any of the claims 1-7, **characterized in that** the composition of the binder is:
18% cement
8% quicklime
56% coal-dust fly ash
18% paper lime.

9. Method as claimed in any of the claims 1-8, **characterized in that** further copper leaching is prevented by the presence of copper-binding means in the binder or the OWF or by taking copper leaching-limiting measures.

10. Method as claimed in claim 9, **characterized in that** the copper-binding means are chosen from zeolites, organic acids and humic acids.

11. Method as claimed in claim 9, **characterized in that** the leaching-limiting measures consist of adding filler, in particular coal-dust fly ash and/or paper lime, and/or of strengthening the form of the material, for instance by levelling off or rolling.

12. Immobilized Organic Wet Fraction to be obtained by means of the method as claimed in any of the claims 1-11.

13. Immobilized Organic Wet Fraction as claimed in claim 11, for use as sealing on a landfill.

14. Immobilized Organic Wet Fraction as claimed in claim 12, for use as building material.

15. Binder for immobilizing Organic Wet Fraction, comprising cement, lime and optional filler.

16. Binder as claimed in claim 15, **characterized in that** the quantity of cement can vary between about 10 and 30%, preferably between about 12 and 28%, more preferably between about 15 and 23%, and is most preferably about 18%.

17. Binder as claimed in claim 15 or 16, **characterized in that** the quantity of lime lies between about 4 and 12%, preferably between about 6 and 10%, and is most preferably about 8%.

18. Binder as claimed in any of the claims 15-17, **characterized in that** the quantity of fillers varies from 36 to 76% for coal-dust fly ash and between 10 and 28% for paper lime, the proportion of coal-dust fly ash preferably amounting to between 45 and 65%, and being most preferably about 56% at a paper lime proportion of about 18%.

19. Binder as claimed in any of the claims 15-18, **characterized in that** the composition of the binder is:
18% cement
8% quicklime
56% coal-dust fly ash
18% paper lime.

20. Binder as claimed in any of the claims 15-19, **characterized in that** copper-binding and/or copper leaching-limiting means are further added.

21. Binder as claimed in claim 19, **characterized in that** the copper-binding means are chosen from zeolites, organic acids and humic acids.

22. Binder as claimed in claim 19, **characterized in that** the copper leaching-limiting means are chosen from coal-dust fly ash and paper lime.
